# EUROPÄISCHE PATENTSCHRIFT

(11) **EP 4 283 064 B1**
(45) Veröffentlichungstag und Bekanntmachung des Hinweises auf die Patenterteilung: **17.04.2024**
(21) Anmeldenummer: 22175162.1
(22) Anmeldetag: 24.05.2022
(51) Int. Cl.: F16B 11/00, F16B 13/14, E04B 1/41, F16B 5/02

(54) **VERFAHREN ZU EINER EINBETTUNG UND BEFESTIGUNG VON ANKERSCHIENEN IN EINEM BAUKÖRPER**
METHOD FOR EMBEDDING AND FIXING ANCHOR RAILS IN A BUILDING
PROCÉDÉ D'INCORPORATION ET DE FIXATION DES RAILS D'ANCRAGE DANS UN CORPS DE BÂTIMENT

(43) Veröffentlichungstag der Anmeldung: 29.11.2023
(73) Patentinhaber: Shaheen, Aamir, 12489 Berlin (DE)
(72) Erfinder: Shaheen, Aamir, 12489 Berlin (DE)
(74) Vertreter: Farago-Schauer, Peter Andreas

(56) Entgegenhaltungen:
- DE-A1-102012 017 730
- US-A1- 2009 013 635

## Beschreibung

Die vorliegende Erfindung betrifft ein Verfahren zu einer Einbettung und Befestigung von Ankerschienen in einem Baukörper, um danach an den Ankerschienen entsprechende Anbauteile befestigen und sicher halten zu können.

Um an einem Gebäude mit einem entsprechenden Baukörper Anbauteile, wie beispielsweise Glas, Stein- oder Metallplatten, Fassadenplatten, ein Balkon oder Aufzugsschienen sicher befestigen zu können, werden diese entweder durch eine jeweilige Schraub- oder Dübelverbindung mit dem Baukörper oder über eine Ankerschiene, die im Baukörper eingelassen und darin fest verbunden ist, verbunden. Bei der Dübelverbindung ist es oft problematisch die jeweiligen Dübel exakt so im Baukörper anzubringen und dafür entsprechende Löcher zu bohren, dass das entsprechende Anbauteil vorbestimmt, korrekt positioniert ist, mit dem richtigen Abstand zum und der richtigen Position am Baukörper. Die Anbauteile werden bevorzugt über Anbauteilverbindungsmittel mit dem Baukörper verbunden, wobei das jeweilige Anbauteilverbindungsmittel ein Langloch aufweisen kann, so dass das Anbauteil in Richtung des Langlochs positionierbar ist. Um Toleranzen des Baukörpers auch besser in einer Querrichtung zum Langloch ausgleichen zu können, aber auch hinsichtlich einer höheren Belastbarkeit werden die Anbauteile bevorzugt über eine oder mehrere Ankerschienen mit dem Baukörper verbunden. Die Ankerschienen sind entlang einer Längsachse mit einem Ankerschienenschlitz ausgebildet, entlang dem das jeweilige Anbauteilverbindungsmittel verschiebbar ist. Das Anbauteil kann dabei bevorzugt durch ein zum Ankerschienenschlitz orthogonales Langloch in Bezug zur Ankerschiene verschoben und justiert werden. Ein sicherer Halt der Ankerschiene im Baukörper ist als Grundanforderung selbstverständlich, wie dem Fachmann bekannt ist. Durch eine Schwerkraft aber auch durch Wind entstehen an den Anbauteilen teilweise hohe Kräfte, die sicher von der Ankerschiene aufgenommen und an den Baukörper weitergeleitet werden. Bevorzugt sind die Ankerschienen in einer ersten Oberfläche, die eine horizontale Betondecke sein kann, im Baukörper nahe einer Kante zu einer dazu winkeligen zweiten Oberfläche des Baukörpers, die entsprechend eine Seitenwand sein kann, eingelassen. Dabei darf der Baukörper, vor allem auch in einem Baukörperbereich der Kante zwischen der ersten und zweiten Oberfläche, durch die an der Ankerschiene angreifenden Kräfte nicht ausbrechen, wobei die Kräfte hohe Kraftanteile in alle Richtungen aufweisen können. Bevorzugt können die Ankerschienen auch innerhalb einer Wand des Baukörpers, wie beispielsweise in einem Aufzugsschacht, installiert sein. Dabei würde die erste Oberfläche eine Oberfläche der jeweiligen Wand sein, in der die Ankerschiene installiert wird, und das Anbauteil kann dabei beispielsweise eine Aufzugsschiene sein.

Das Dokument EP 3 438 362 A1 offenbart eine Befestigung der Ankerschiene in der ersten Oberfläche nahe der Kante zur dazu winkeligen zweiten Oberfläche, wobei eine zusätzliche Seitenplatte mit der zweiten Oberfläche, die die Seitenwand ist, so fest verbunden ist, dass die Ankerschiene dadurch höheren Kräften widerstehen kann, ohne dass der Bereich der Kante dabei ausreißt.

Das Dokument WO 2009 083 002 A1 offenbart eine Anordnung von seitlichen Ankerelementen an der Ankerschiene, die eine seitliche Verstärkung der Festigkeit der Ankerschiene im Baukörper bewirken.

Das Dokument EP 2 907 932 A1 offenbart eine Anordnung von zur Ankerschiene senkrechten und seitlichen Ankerelementen an der Ankerschiene, die eine entsprechende Verstärkung der Festigkeit der Ankerschiene im Baukörper bewirken.

Das Dokument WO 2013 013 876 A1 offenbart verschiedene andere Ankerelemente zur Befestigung an der Ankerschiene im Baukörper, die senkrecht zur Ankerschiene verlaufen und die entweder mit in den Baukörper eingegossen werden oder in Löchern, die in den Baukörper eingebracht werden, verankert werden.

Das Dokument US 2009 0 013 635 A1 offenbart eine Ankerschiene im Baukörper, die eine kreuzartige Form aufweist, um somit eine Befestigung im Baukörper in zwei horizontalen Richtungen zu ermöglichen. Die Ankerschiene hat dabei schwalbenschwanzförmige Querschnitte der jeweiligen im Baukörper eintauchenden Ankerschienenteile, wobei in den Baukörper dazu ebenso passende schwalbenschwanzförmige Schlitze genau positioniert einzufräsen sind.

Zur Klarheit ist unter senkrecht zur Ankerschiene eine Richtung zu verstehen, die orthogonal zur ersten Oberfläche ist, wobei die Ankerschiene parallel zur ersten Oberfläche verläuft und der Ankerschienenschlitz an der ersten Oberfläche zu Tage tritt.

Die Ankerschienen, wie sie im Stand der Technik bekannt sind, werden beim Erstellen des Baukörpers mit in den Baukörper eingegossen, um so eine Einheit mit dem Baukörper zu bilden. Dies hat den Vorteil eines sehr guten Kraftverbundes und einer entsprechenden Kraftweiterleitung zwischen der Ankerschiene und dem Baukörper. Problematisch dabei ist dabei aber eine jeweilige korrekte Platzierung der zahlreichen Ankerschienen in beispielsweise großen Gebäuden, wobei alle Parameter der Anbauteile, wie Schwere und Größe und Abstand bereits absolut festgelegt sein müssen, bevor der Baukörper zusammen mit den Ankerschienen darin beispielsweise mit Beton gegossen und fertiggestellt wird. Dabei ist es häufig der Fall, dass einige der Ankerschienen nicht korrekt, das heißt zu tief oder zu hoch in Bezug zur ersten Oberfläche und/oder nicht an der richtigen Stelle sitzen. Nachträgliche Justierungen der eingegossenen Ankerschienen sind nicht möglich. Nachträglich können entweder nur aufwendige und kostspielige Anbauteilverbindungsmittel für die Anbauteile konstruiert und verwendet werden. Solche Kompensationen sind oft sehr zeitintensiv, verzögern eine Fertigstellung des Gebäudes und sind daher sehr kostenintensiv.

Die Aufgabe der Erfindung, um die Nachteile aus dem Stand der Technik zu beseitigen, besteht daher in der Bereitstellung eines Verfahrens zu einer Einbettung und Befestigung von Ankerschienen in einem Baukörper, um daran Anbauteile sicher zu halten, wobei die Ankerschienen möglichst einfach und dennoch sicher im Baukörper angeordnet und befestigt werden können sollen.

Die vorstehende Aufgabe wird von einem Verfahren gemäß den Merkmalen des unabhängigen Anspruchs 1 gelöst. Weitere vorteilhafte Ausführungsformen der Erfindung sind in den abhängigen Ansprüchen angegeben.

Erfindungsgemäß wird ein Verfahren zu einer Einbettung und Befestigung einer Ankerschiene in einer ersten Oberfläche eines Baukörpers bereitgestellt, wobei die Ankerschiene an der ersten Oberfläche mit einem Ankerschienenschlitz zutage tritt, der dafür bestimmt ist, über ein Anbauteilverbindungsmittel mindestens ein Anbauteil bei davon ausgehenden vorbestimmten Kräften sicher zu halten, die folgenden Schritte umfassend:
a) Bestimmen einer Position und Ausrichtung eines Frässchlitzes mit einer Schlitzlänge, Schlitzbreite und Schlitztiefe unter der ersten Oberfläche, um darin die Ankerschiene in einer vorbestimmten Ankerschienenposition einbetten zu können;
b) Fräsen des Frässchlitzes an der vorbestimmten Position und mit der vorbestimmten Ausrichtung durch die erste Oberfläche in den Baukörper;
c) Einlegen der Ankerschiene in den Frässchlitz;
d) Befestigen der Ankerschiene im Frässchlitz durch ein Ankerschienenverbindungsmittel, das ausgebildet ist, die Ankerschiene mit dem Baukörper so fest zu verbinden, dass die vom jeweiligen Anbauteil ausgehenden Kräfte sicher gehalten werden.

Das erfindungsgemäße Verfahren hat den besonderen Vorteil, dass bei der Baukonstruktion die Anbauteile, wie beispielsweise Glas-, Stein-, Metallplatten oder andere Fassadenplatten, die von der Ankerschiene sicher gehalten werden müssen, nicht schon in Ihrer Größe und Schwere bekannt sein müssen, und eine finale Platzierung der Anbauteile auch nach Fertigstellung des Baukörpers vorgenommen werden kann. Der Baukörper kann beispielsweise ein Stahlbetonkörper oder ein Mauerwerk sein und/oder Beton, Steine oder Holz umfassen. Auch entfällt ein exaktes Positionieren und Halten der Ankerschienen bei einer Verschalung des Baukörpers und bei einem Ausgießen mit Beton, so dass das vorliegende Verfahren auch in dieser Hinsicht zeit- und kostensparend ist. Ebenso können mit dem vorliegenden Verfahren möglichen Toleranzen und einem Verzug beispielsweise einer seitlichen Verschalung nachträglich Rechnung getragen werden. Die Frässchlitze können einfach an eine Endform des Baukörpers angepasst und die Ankerschienen entsprechend eingelegt und befestigt werden. Hierfür wird bevorzugt eine Fräsmaschine verwendet, die so ausgebildet ist, die Frässchlitze mit der vorbestimmten Schlitzlänge, Schlitzbreite und Schlitztiefe mit einem entsprechenden Anschlag zur ersten Oberfläche im Baukörper zu erzeugen. Die Fräsmaschine wird gemäß den Tragfähigkeitsanforderungen und der zu verwendenden Ankerschiene auf die entsprechende Schlitzlänge, Schlitzbreite und Schlitztiefe passend zur Ankerschiene eingestellt.

Durch die vorliegende Erfindung werden die Nachteile von exakt zu bohrenden Löchern für Schraub- oder Dübelverbindungen im Baukörper für die Anbauteile oder alternativ von während einem Bau des Baukörpers fest eingegossenen Ankerschienen vermieden. Durch das erfindungsgemäße Verfahren wird eine Befestigung der Anbautele am Baukörper sowohl ohne größere Vorplanung der Anbauteile wesentlich flexibler, als auch zeit- und kostensparender, als es durch die Verfahren aus dem Stand der Technik bekannt ist. Toleranzen bei einem Bau des Baukörpers kann nachträglich einfach Rechnung getragen werden, indem die jeweiligen Ankerschienen nach Fertigstellung des Baukörpers entsprechend optimal gesetzt werden können. Nach der Fertigstellung des Baukörpers sind bereits eingegossene Ankerschienen, die nicht korrekt positioniert sind, schwierig und zeitintensiv herauszufräsen, und oft sind Versetzungen der Ankerschiene um beispielsweise 5-15 cm nur unter großen Schwierigkeiten und Einbußen an Festigkeit eines dadurch beschädigten Baukörpers möglich. Oder es werden weitaus aufwendigere Anbauteilverbindungsmittel mit möglicherweise zusätzlichen Adapterschienen, die kostspielig sind, notwendig. Eine eigene Untersuchung zeigt, dass oftmals ca. 20% der fest eingegossenen Ankerschienen, wie es im Stand der Technik üblich ist, nicht korrekt installiert sind und entsprechende spezielle Adapter benötigen. Eine Verletzung der Ankerschienen muss dabei auch vermieden werden, um eine korrosionsschützende Schicht auf den Ankerschienen nicht zu verletzen. Auch kann durch den Frässchlitz eine Tiefe der Ankerschiene in Bezug zur ersten Oberfläche einfach und sicher hergestellt werden, was bei einem Eingießen gemäß Stand der Technik oft nicht gewährleistet ist, da sich die Ankerschiene bei Eingießen verschieben kann. Das Herstellen des Frässchlitzes beispielsweise parallel zu einer Kante, die zwischen der ersten und einer dazu abgewinkelten zweiten Oberfläche des Baukörpers, an der die Anbauteile hängen sollen, gebildet wird, ist ebenso sehr einfach und zuverlässig erzeugbar.

Zur Klarheit wird unter der Ankerschiene eine Schiene oder ein Schienenprofil verstanden, mit der bevorzugt ein oder mehrere Ankerschienenverbindungsmittel verbunden sind oder verbindbar sind.

Oft wird die jeweilige Ankerschiene in der ersten Oberfläche vor der Kante zu der dazu abgewinkelten zweiten Oberfläche eingebettet, wie beispielsweise auf einer waagerechten Deckenwand vor der Kante zu einer anschließenden senkrechten Seitenwand. Die zweite Oberfläche des Baukörpers ist bevorzugt rechtwinkelig zur ersten Oberfläche angeordnet. Andere spitze oder Stumpfe Winkel zwischen der ersten und der zweiten Oberfläche sind auch vorstellbar. Bevorzugt sind die erste Oberfläche beispielsweise eine im Wesentlichen obere horizontale Deckenoberfläche, wobei die zweite Oberfläche zu einer dazu im Wesentlichen senkrechten Seitenwand gehören kann. Alternativ kann die erste Oberfläche auch eine senkrechte oder schräge Seitenwand sein, wie beispielsweise in einem Aufzug. Die Anbauteile können beispielsweise Platten aus Metall, Glas, Keramik oder Stein oder andere Fassadenplatten sein, die über die Anbauteilverbindungsmittel mit der Ankerschiene verbunden werden. Aus dem Stand der Technik ist es bekannt, dass die Kräfte auf die Platten, wie sie sie beispielsweise zu einer Verkleidung an Gebäuden verwendet werden, in hohen Höhen der Gebäude sehr hoch sein können. Es versteht sich, dass die Kräfte sicher von der Ankerschiene gehalten werden müssen, die sehr hohe Kraftanteile aufweisen können. Dabei werden Ankerschienenverbindungsmittel verwendet, die die Ankerschiene mit dem Baukörper genügend fest und sicher verbinden und die vorbestimmte daran angreifende Kräfte sicher weiterleiten. Insbesondere ist bei einer Installation der Ankerschiene vor der Kante darauf zu achten, dass ein Ausbrechen eines Baukörperbereichs mit der Kante vermieden wird. Zug- oder Querkräfte in diesem Baukörperbereich sind insbesondere bei Beton-Baukörpern problematisch.

Die Schlitzlänge, die Schlitzbreite und die Schlitztiefe sind bevorzugt so ausgebildet, dass die Ankerschiene darin mit einer vorbestimmten Toleranz einlegbar und verschiebbar ist, um nach dem Fräsen des Frässchlitzes in die richtige vorbestimmte Ankerschienenposition verschiebbar zu sein. Wenn die Ankerschiene richtig positioniert worden ist, kann sie im Baukörper befestigt werden. Die Befestigung der Ankerschiene im Frässchlitz erfolgt durch Bohren eines entsprechenden Befestigungslochs für das Ankerschienenverbindungsmittel und bevorzugt zusätzlich durch ein Ausfüllen verbleibender Spalte und/oder Fugen zwischen der Ankerschiene und dem Frässchlitz mit dem Ankerschienenverbindungsmittel, das in diesem Fall ein Klebstoff oder Mörtel oder Beton oder ähnliches ist.

Die Anbauteilverbindungsmittel kann beispielsweise eine Konsole sein, die einerseits über Befestigungsschraubteile mit der Ankerschiene und andererseits mit dem jeweiligen Anbauteil verbunden wird.

Das Fräsen des Frässchlitzes wird bevorzugt mit Hilfe einer Führungsschiene vorgenommen, auf der die Fräsmaschine zum Fräsen des Frässchlitzes vorbestimmt verfahrbar ist.

Bevorzugt ist die Fräsmaschine in einer Richtung entlang der Schlitzlänge und in einer Tiefe bis zur Schlitztiefe verfahrbar. Bevorzugt wird für das Fräsen des Frässchlitzes eine Führungsschiene verwendet, die die Fräsmaschine bis zu einem jeweiligen Anschlag bis zu einer vorbestimmten Tiefe und/oder bis einer vorbestimmten Schlitzlänge einfahren lässt. Bevorzugt ist die Schlitzbreite der Fräsmaschine einstellbar. Dabei kann eine Einstellung beispielsweise durch Anbringen entsprechend vieler nebeneinander angeordneter Frässcheiben erfolgen. Der Frässchlitz kann entweder innerhalb oder außerhalb eines Bereichs der Führungsschiene gefräst werden.

Das Bestimmen der Position und der Ausrichtung des Frässchlitzes erfolgt bevorzugt mit der Führungsschiene oder der Fräsmaschine, wobei die Führungsschiene oder die Fräsmaschine bevorzugt eine entsprechende Messvorrichtung zu einer Bestimmung eines vorbestimmten Abstands zu mindestens einem vorbestimmten Referenzpunkt oder einer Kante am Baukörper oder eine Anschlagvorrichtung mit dem vorbestimmten Abstand aufweist. Die Fräsmaschine ist zum Fräsen des Frässchlitzes auf der Führungsschiene bevorzugt zwischen zwei Anschlägen vorbestimmt verfahrbar. Zur Klarheit kann die Kante zwischen der ersten und der dazu abgewinkelten zweiten Oberfläche liegen.

Verbleibende Spalte und Fugen zwischen der Ankerschiene und dem Frässchlitz werden bevorzugt mit Füllmaterial aufgefüllt, das sich darin verfestigt. Dabei kann das Füllmaterial bevorzugt eines von Folgendem umfassen: Mörtel, Beton, Klebstoff, Epoxidharz, Acrylharz, Glasfasern, flüssiges Metall. Als Füllmaterial sind alle im Stand der Technik für solche Ausfüllungen vorgesehenen Materialien einsetzbar, die auch eine genügend hohe Festigkeit haben.

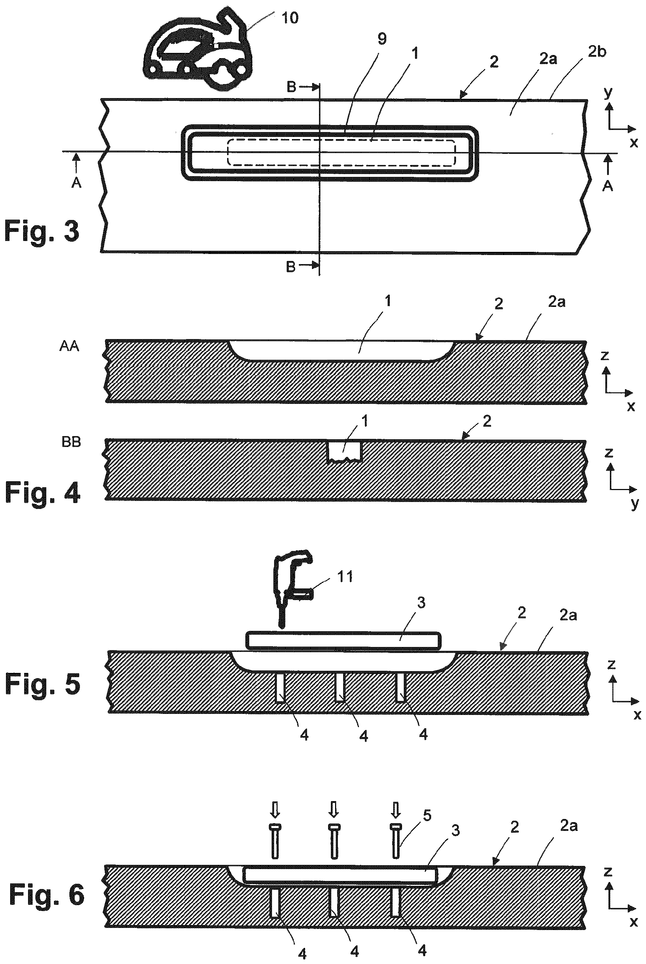

Ein Verbinden der Ankerschiene mit dem Baukörper kann bevorzugt zusätzlich zu dem mindestens einen Ankerschienenverbindungsmittel durch einen Haltebügel erfolgen, der mit seinem ersten Ende mit der Ankerschiene in Kontakt gebracht oder verbunden wird, und dessen dem ersten Ende gegenüberliegendes zweites Ende des Haltebügels von der Ankerschiene beabstandet und auf einer Seite der Ankerschiene mit dem Baukörper verbunden wird, die entgegengesetzt zu einer vorbestimmten Richtung einer Zug- oder Querkraft auf die Ankerschiene liegt. Das erste Ende des Haltebügels ist dabei ausgebildet und angeordnet, Kraftanteile auf die Ankerschiene in der Richtung der Zug- oder Querkraft aufzunehmen, indem der Haltebügel die Ankerschiene in der Richtung der Zugkraft bevorzugt durch einen Anschlag durch den Haltebügel stoppt, und an das gegenüberliegende zweite Ende des Haltebügels weiterzuleiten. Bevorzugt ist unter der Zugkraft eine Querkraft auf die Ankerschiene in y-Richtung zu verstehen, wie beispielsweise in Fig. 3 skizziert.

Bevorzugt wird das zweite Ende des Haltebügels mit dem Baukörper über mindestens ein weiteres Befestigungsloch im Baukörper und über ein jeweiliges, entsprechendes Verbindungsmittel verbunden. Bevorzugt wird das erste Ende des Haltebügels mit der Ankerschiene vor dem Einlegen der Ankerschiene in den Baukörper fest verbunden, beispielsweise durch ein Anschweißen oder Anschrauben. Alternativ bevorzugt kann das erste Ende des Haltebügels auch nach dem Einlegen der Ankerschiene in den Baukörper mit der Ankerschiene in Kontakt gebracht oder verbunden werden, beispielsweise indem das erste Ende als ein Bügel ausgebildet ist, der um die Ankerschiene gelegt wird und so die Ankerschiene hält und die Kraftanteile von der Ankerschiene aufnehmen kann.

Bevorzugt ist der Haltebügel bügelartig ausgebildet und wird mit der Ankerschiene in Kontakt gebracht oder verbunden, indem der Haltebügel mit seinem ersten Ende um die Ankerschiene bügelartig herum angeordnet wird, so dass das erste Ende mit der Ankerschiene direkt in Kontakt steht oder verbunden ist und in Richtung der Zugkraft vor der Ankerschiene angeordnet ist. Bevorzugt werden dabei die Kraftanteile der Ankerschiene in Richtung zur Kante schon vor der Kante zumindest teilweise aufgenommen und an den Baukörper weiter von der der Kante entfernt weitergeleitet, als die Ankerschiene von der Kante entfernt ist.

Die Kräfte der Anbauteile auf die Ankerschiene sind im Wesentlichen Zug- und Querkräfte, die senkrecht und nach außen bevorzugt zur Kante hin verlaufen, so dass eine Gefahr besteht, dass der Baukörperbereich mit der Kante weggebrochen werden könnte. Dem wirkt die Befestigung der vorliegenden Erfindung einerseits dadurch entgegen, dass eine gute vorbestimmte Ankerschienenpositionierung eine primäre gute Verankerung im Baukörper bewirkt. Zusätzlich kann die Ankerschiene durch den Haltebügel gehalten werden, der mit seinem zweiten Ende am Baukörper weiter von der der Kante entfernt ist, als die Ankerschiene von der Kante entfernt ist, wobei die Kraftanteile im Haltebügel Kräfte auf der Ankerschiene auf den Baukörperbereich an der Kante reduzieren. Eine Gefahr eines Ausbrechens des Baukörperbereichs wird dadurch verringert.

Die Ankerschiene hat im Ankerschienenschlitz zwei gegenüberliegende Ankerschienenschlitzkanten, von denen eine erste Ankerschienenschlitzkante in Bezug zur Kante einen kleineren Abstand aufweist als zur ersten Ankerschienenschlitzkante gegenüberliegende zweite Ankerschienenschlitzkante. Der Haltebügel könnte mit seinem ersten Ende so ausgebildet sein, dass das erste Ende des Haltebügels in die Ankerschiene an der zweiten Ankerschienenschlitzkante eingreift und bevorzugt hintergreift und so die Kraftanteile auf die Ankerschiene aufnimmt, die in der Richtung der Zugkraft, wie beispielsweise zur Kante hin, auftreten.

Das Fräsen des Frässchlitzes durch die erste Oberfläche in den Baukörper erfolgt bevorzugt so, dass zunächst senkrecht in den Baukörper eingefräst wird und dann seitlich im Frässchlitz eine Hinterschneidung erzeugt wird. Alternativ bevorzugt erfolgt das Fräsen des Frässchlitzes in den Baukörper in einem schrägen Winkel zur ersten Oberfläche, so dass dabei eine Hinterschneidung zur ersten Oberfläche erzeugt wird.

Bevorzugt wird die Hinterschneidung so gefräst, dass der Frässchlitz, der zwei gegenüberliegende Frässchlitzseitenwände aufweist, zunächst bis zu einer vorbestimmten ersten Schlitztiefe senkrecht durch die erste Oberfläche und dann in einem zweiten Winkel zur ersten Oberfläche bis zu einer zweiten Schlitztiefe weitergefräst wird. Der zweite Winkel liegt bevorzugt in einem Bereich von 0-85° und weiter bevorzugt in einem Bereich von 0 - 45°.

Der schräge Winkel zur ersten Oberfläche liegt bevorzugt in einem Bereich von 45 - 89° oder weiter bevorzugt von 60 - 89 ° oder weiter bevorzugt von 70 - 80° oder von 80 - 89° oder noch weiter bevorzugt von 80 - 85°.

Das Befestigen der Ankerschiene erfolgt bevorzugt durch folgende Schritte:
- Einlegen der Ankerschiene in der vorbestimmten Ankerschienenposition oder einer entsprechenden Bohrschablone im Frässchlitz in einer entsprechenden Position;
- Bohren durch mindestens ein Ankerschienenloch oder Bohrschablonenloch eines entsprechenden Befestigungslochs in den Baukörper im Frässchlitz; und
- Befestigen der Ankerschiene im Frässchlitz mit dem Baukörper durch das Ankerschienenverbindungsmittel, das als Schraube, Bolzen, Nagel oder Dübel ausgebildet ist und die Ankerschiene durch das jeweilige Ankerschienenloch und Befestigungsloch mit dem Baukörper verbindet.

Als das Ankerschienenverbindungsmittel kommen dabei beispielsweise in Betracht: ein oder mehrere Schrauben, Betonschrauben, Bolzen, Nägel, Dübel, Haken, Winkel, Hülsenanker, Anker mit Gewinde, Verbundanker, Spreizanker, und dergleichen, was aus dem Stand der Technik bekannt ist. Das Befestigen ist bevorzugt das Bohren der entsprechenden Befestigungslöcher und das Verschrauben der Ankerschiene mit dem Befestigungsloch bzw. mit dem Baukörper.

Zusätzlich bevorzugt erfolgt das Befestigen der Ankerschiene durch folgende Schritte:
- Einlegen der Ankerschiene in der vorbestimmten Ankerschienenposition; und
- Befestigen der Ankerschiene im Frässchlitz mit dem Baukörper durch ein Ausfüllen vorhandener Spalte und/oder Fugen zwischen der Ankerschiene und dem Frässchlitz mit dem Ankerschienenverbindungsmittel, das als ein Klebstoff, Beton oder Mörtel oder flüssiges Metall ausgebildet ist und die Ankerschiene entsprechend fest und formschlüssig mit dem Baukörper verbindet.

Dabei wird die Ankerschiene im Frässchlitz eingeklebt oder eingegossen.

Das Bohren des Befestigungslochs in den Baukörper kann so weit oder tief erfolgen, bis ein Durchbohren einer entsprechenden Wand des Baukörpers erreicht wird und das Loch auch auf der Gegenseite der Wand des Baukörpers herauskommt und zugänglich wird. Das Verbinden des mindestens einen Ankerschienenverbindungsmittels mit dem Baukörper geschieht dann bevorzugt dadurch, dass das Ankerschienenverbindungsmittel auf der Gegenseite durch ein Gegenverbindungselement gekontert wird.

Zur Klarheit liegt die Gegenseite des Baukörpers gegenüber zu einer Schienenseite des Baukörpers, von wo aus das Befestigungsloch gebohrt wird. Bevorzugt ist das Gegenverbindungselement eine Mutter oder Schraube mit oder ohne Unterlegscheibe, die mit dem Ankerschienenverbindungsmittel eine Schraubverbindung eingeht. Das Durchbohren und Kontern des Ankerschienenverbindungsmittels mit dem Gegenverbindungselement helfen, ein Ausbrechen des Baukörpers zu verhindern.

Es zeigen
- Fig. 1: in einer Ansicht von oben einen Baukörper mit einer ersten Oberfläche mit einem darin eingebrachten Frässchlitz und einer im Frässchlitz implementierten Ankerschiene, an der ein Anbauteilverbindungsmittel angeschraubt ist, das ein Anbauteil trägt;
- Fig. 2: in einer perspektivischen Ansicht eine bevorzugte Ausbildungsform der Ankerschiene;
- Fig. 3: in einer Ansicht von oben den Baukörper mit der ersten Oberfläche mit einer darauf positionierten Führungsschiene für eine Fräsmaschine und für einen gestrichelt gezeichneten Frässchlitz, zu einem ersten Verfahrensschritt;
- Fig. 4: eine Seitenschnittansicht AA und eine Seitenschnittansicht BB durch den Baukörper nach Fig. 3, in den der Frässchlitz eingebracht worden ist, gemäß einem zweiten Verfahrensschritt;
- Fig. 5: die Seitenschnittansicht AA durch den Baukörper nach Fig. 4, mit nunmehr in den Frässchlitz eingebrachten Befestigungslöchern, gemäß einem bevorzugt weiteren Verfahrensschritt;
- Fig. 6: die Seitenschnittansicht AA durch den Baukörper nach Fig. 5, mit nunmehr in den Frässchlitz eingelegter Ankerschiene, die über Ankerschienenverbindungsmittel mit dem Baukörper verbunden wird, gemäß einem dritten Verfahrensschritt, wobei das Ankerschienenverbindungsmittel im dargestellten Fall bevorzugt Schrauben oder ähnliches sind;
- Fig. 7: die Seitenschnittansicht AA durch den Baukörper nach Fig. 6, mit der Ankerschiene, die im Frässchlitz mit dem Baukörper durch Ankerschienenverbindungsmittel, die im dargestellten Fall Schrauben sind, verbunden ist;
- Fig. 8: die Seitenschnittansicht AA durch den Baukörper nach Fig. 7, mit der Ankerschiene, die im Frässchlitz mit dem Baukörper verbunden ist, wobei seitliche Fugen zwischen dem Frässchlitz und der Ankerschiene mit einem Füllmaterial ausgefüllt sind;
- Fig. 9: in einer Draufsicht von oben die bevorzugte Ankerschiene aus Fig. 2 und einen bevorzugten Haltebügel, der um die Ankerschiene herumgelegt ist;
- Fig. 10: in einer Draufsicht von oben die bevorzugte Ankerschiene aus Fig. 2 und einen anderen bevorzugten Haltebügel, der um die Ankerschiene herumgelegt ist;
- Fig. 11: in einer Draufsicht von oben die bevorzugte Ankerschiene aus Fig. 2 und einen weiteren bevorzugten Haltebügel, der in die Ankerschiene durch ihren Ankerschienenschlitz von oben eingreift;
- Fig. 12: in der Seitenschnittansicht BB die bevorzugte Ankerschiene aus Fig. 11 mit dem weiteren bevorzugten Haltebügel, der in die Ankerschiene durch ihren Ankerschienenschlitz von oben eingreift;
- Fig. 13: in einer Draufsicht von oben eine andere bevorzugte Ankerschiene mit seitlichen Haltebügelelementen, die mit dem Baukörper verschraubbar sind;
- Fig. 14: in einer Draufsicht von oben eine weitere bevorzugte Ankerschiene mit anderen seitlichen Haltebügelelementen, die mit dem Baukörper verschraubbar sind;
- Fig. 15-19: in der Seitenschnittansicht BB den Baukörper mit dem Frässchlitz und der bevorzugten Ankerschiene, die jeweils durch ein unterschiedliches Ankerschienenverbindungsmittel mit dem Baukörper verbunden ist, wobei das Ankerschienenverbindungsmittel in Fig. 15 ein Gewindeanker, in Fig. 16 ein Bewehrungsstab, in Fig. 17 ein Hülsenanker, in Fig. 18 eine Betonschraube und in Fig. 19 eine Gewindeschraube mit einer Kontermutter;
- Fig. 20: in der Seitenschnittansicht BB den Baukörper mit dem Frässchlitz und einer weiteren bevorzugten Ankerschiene, die einen trapezförmigen Querschnitt aufweist;
- Fig. 21: in der Seitenschnittansicht BB den Baukörper mit dem Frässchlitz und einer weiteren bevorzugten Ankerschiene, die einen anderen trapezförmigen Querschnitt aufweist;
- Fig. 22: in einer Seitenansicht eine weitere bevorzugte Ankerschiene, deren Seitenwände unten ein geripptes oder konturiertes Profil aufweisen;
- Fig. 23: in der Seitenschnittansicht BB den Baukörper mit einer weiteren bevorzugten Ankerschiene, deren Seitenwände ein anders konturiertes Profil aufweisen;
- Fig. 24: in der Seitenschnittansicht BB den Baukörper mit der bevorzugten Ankerschiene von Fig. 22, wobei der Frässchlitz ab einer ersten Tiefe bis zu einer zweiten Tiefe eine Hinterschneidung aufweist;
- Fig. 25: in der Seitenschnittansicht BB den Baukörper mit der bevorzugten Ankerschiene von Fig. 22, wobei der Frässchlitz von der ersten Oberfläche an eine trapezartige Hinterschneidung aufweist; und
- Fig. 26: in der Seitenschnittansicht BB den Baukörper mit der bevorzugten Ankerschiene von Fig. 22, wobei der Frässchlitz von der ersten Oberfläche an ohne Hinterschneidung senkrecht bis zur zweiten Tiefe verläuft.

### Detaillierte Beschreibung von Ausführungsbeispielen

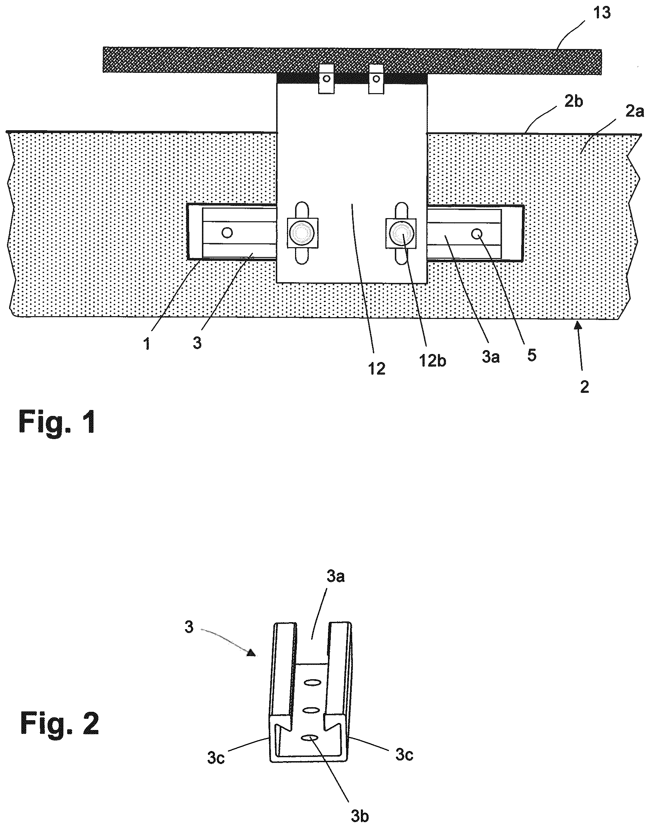

Fig 1 zeigt einen Baukörper 2, der beispielsweise aus Stahlbeton aufgebaut ist, mit einer ersten Oberfläche 2a, in die ein Frässchlitz 1 eingefräst ist, und in dem eine Ankerschiene 3 eingelassenen und befestigt ist. An der Ankerschiene 3 und dabei an deren Ankerschienenschlitz 3a wird ein Anbauteil 13, das beispielsweise eine Verkleidungsplatte für ein Gebäude ist, über ein Anbauteilverbindungsmittel 12 und ein entsprechendes Befestigungsschraubteil 12b befestigt und muss dabei sicher gehalten werden. Die erste Oberfläche 2a ist beispielsweise, wie im dargestellten Fall, waagerecht, wobei das Anbauteil 13 im dargestellten Falle senkrecht am Baukörper 2 hängt. Die Ankerschiene 3 könnte auch in einer senkrechten oder schrägen Wand als dem Baukörper 2 mit der entsprechenden ersten Oberfläche 2a eingebaut werden. Wie beispielsweise in Fig. 1 dargestellt, kann der Baukörper 2 eine zur ersten Oberfläche 2a abgewinkelte zweite Oberfläche 2b aufweisen, die an einer Übergangslinie eine Kante bilden. Dabei wird die Ankerschiene 3 bevorzugt parallel zur Kante verbaut, wobei darauf zu achten ist, dass der Baukörperbereich zwischen der Ankerschiene 3 und der Kante bei einer Belastung der Ankerschiene 3 nicht ausbricht.

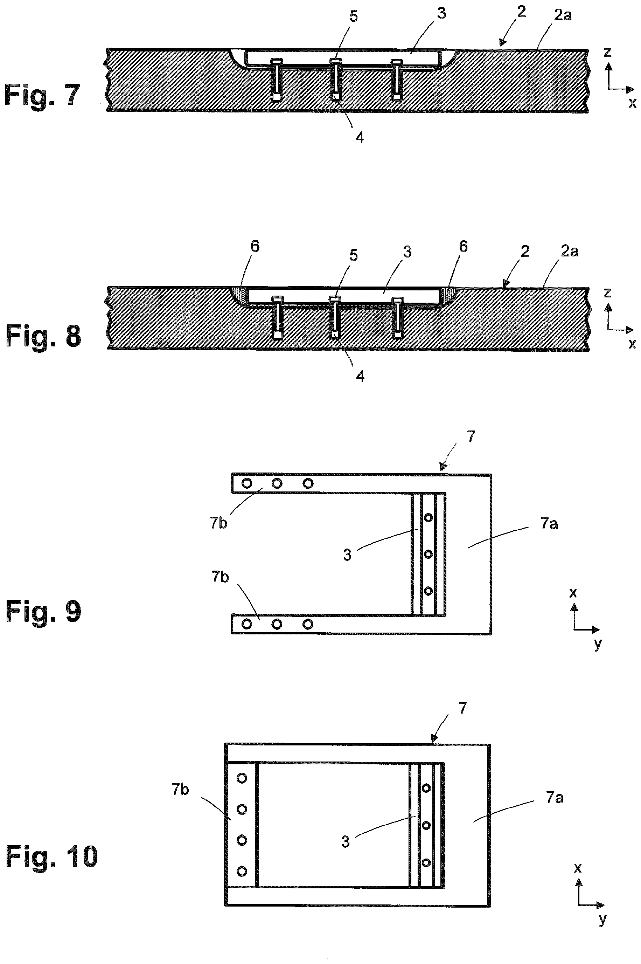

Die Ankerschiene 3 ist im Frässchlitz 1 durch ein Ankerschienenverbindungsmittel 5 ausreichend sicher zu befestigen, so dass die Ankerschiene Kräfte, die im Wesentlichen vom Anbauteil 13 ausgehen, zuverlässig hält und an den Baukörper 2 weiterleitet. Wie in Fig. 1 und Fig. 7 dargestellt, ist das Ankerschienenverbindungsmittel 5 bevorzugt eine Schraubverbindung, die die Ankerschiene 3 mit dem Baukörper 2 verbindet. Zusätzliche können dabei vorhandene Nuten und/oder Spalte mit einem Füllmaterial 6 ausgegossen werden, um eine bessere Seitenstabilität zu erzeugen. Das Füllmaterial kann beispielsweise Mörtel, Beton, Klebstoff, Füll- oder Klebeharz, flüssiges Metall oder ein anderes aus dem Stand der Technik bekanntes Mittel für ein Ausfüllen von Fugen und Spalten von Baukörpern sein. Als Ankerschienenverbindungsmittel 5 kann aber auch nur das Füllmaterial selbst verwendet werden, welches eine genügend feste Klebeverbindung zwischen der Ankerschiene 3 und dem Frässchlitz 1 bzw. dem Baukörper 2 erzeugt.

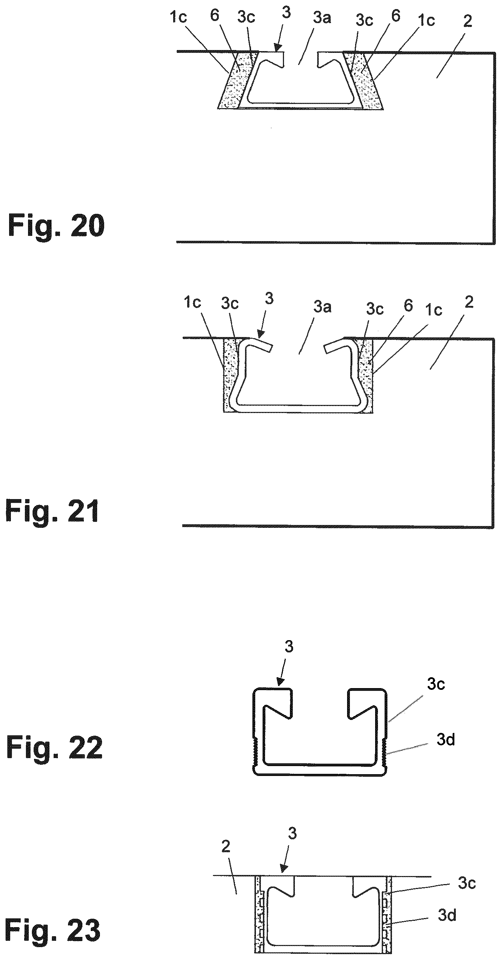

Fig. 2 zeigt die Ankerschiene 3, die entlang einer Längsachse mit einem Bodenteil, zwei gegenüberliegenden Ankerschienenseitenwänden 3c und dazwischen an einer Oberseite mit dem Ankerschienenschlitz 3a ausgebildet ist, wobei im Bodenteil Ankerschienenlöcher 3b eingebracht sein können. Dabei weist die Ankerschiene 3 ein Querschnittprofil auf, das bevorzugt rechtwinklig ist mit dem oberen Ankerschienenschlitz 3a. Ein alternativ bevorzugtes Querschnittprofil der Ankerschiene 3 ist trapezartig mit dem oberen Ankerschienenschlitz 3a, wie beispielsweise in Fig. 20 dargestellt. Bevorzugt sind auch alle anderen Ankerschienen 3, wie sie aus dem Stand der Technik bekannt sind, denkbar, dass sie bei dem hierin beschriebenen, erfindungsgemäßen Verfahren einsetzbar sind.

In der Praxis haben die Ankerschienen 3 Abmaße mit einer Länge von beispielsweise 10 - 600 cm, und einer Breite von beispielsweise 2 - 10 cm und einer Tiefe von beispielsweise 1 - 10 cm. Bevorzugt sind die Ankerschienen 3 aus Metall, wie beispielsweise aus einer Stahllegierung.

Die Kräfte, die von den Ankerschienen 2 gehalten werden müssen, liegen üblicherweise für Querkraftanteile in y-Richtung bei bis zu 150 kN, für Längskraftanteile in der Längsrichtung oder x-Richtung bei bis zu 50 kN, und für Kraftanteile senkrecht zur Ankerschiene 3 in z-Richtung bei bis zu 150 kN. Je nach Anwendung können die jeweiligen Kraftanteile auch kleiner oder größer sein.

Ein erfindungsgemäßes Verfahren zu einer Einbettung und Befestigung der Ankerschiene 3 in der ersten Oberfläche 2a des Baukörpers 2 umfasst folgende Schritte:
a) Bestimmen einer Position und Ausrichtung eines Frässchlitzes 1 mit einer Schlitzlänge, Schlitzbreite und Schlitztiefe unter der ersten Oberfläche 2a, um darin die Ankerschiene 3 in einer vorbestimmten Ankerschienenposition einbetten zu können;
b) Fräsen des Frässchlitzes 1 an der vorbestimmten Position und mit der vorbestimmten Ausrichtung durch die erste Oberfläche 2a in den Baukörper 2;
c) Einlegen der Ankerschiene 3 in den Frässchlitz 1;
d) Befestigen der Ankerschiene 3 im Frässchlitz 1 durch ein Ankerschienenverbindungsmittel 5, das ausgebildet ist, die Ankerschiene 3 mit dem Baukörper 2 so fest zu verbinden, dass die vom jeweiligen Anbauteil 13 ausgehenden Kräfte sicher gehalten werden.

Nach dem Einlegen und Befestigen der Ankerschiene 3 tritt diese an der ersten Oberfläche 2a mit einem Ankerschienenschlitz 3a zutage, der dafür bestimmt ist, über das Anbauteilverbindungsmittel 12 das entsprechendes Anbauteil 13 zu halten und die davon ausgehenden Kräfte sicher aufzunehmen und zu halten. Die Ankerschiene wird bevorzugt in einer Nähe und parallel zur Kante zwischen der ersten Oberfläche 2a und der dazu abgewinkelten zweiten Oberfläche 2b des Baukörpers 2 verbaut.

Zur Klarheit wird unter dem Einbetten und Befestigen der Ankerschiene 3 in der ersten Oberfläche 2a des Baukörpers 2 verstanden, dass die Ankerschiene 3 zumindest teilweise unter der ersten Oberfläche 2a im Baukörper 2 verbaut wird. Die Ankerschiene 3 schließt bevorzugt mit der ersten Oberfläche 2a ab, sie kann aber auch etwas überstehen oder aber auch darunter im Baukörper 2 verbaut werden.

Bevorzugt wird der Frässchlitz 1 mit einer Fräsmaschine 10 und einer dazu passenden Führungsschiene 9 erzeugt. Der Frässchlitz 1 wird entlang einer Frässchlitzlängsachse erzeugt, die bevorzugt parallel zur Längsachse der Ankerschiene 3 erzeugt wird. Beim Fräsen des Frässchlitzes 1 werden ein Frässchlitzboden mit der Schlitztiefe und Schlitzlänge und zwei Frässchlitzseitenwände 1c erzeugt.

Das Befestigen der Ankerschiene 3 im Frässchlitz 1 erfolgt bevorzugt durch folgende Schritte:
- Einlegen im Frässchlitz 1 der Ankerschiene 3 in der vorbestimmten Ankerschienenposition oder einer entsprechenden Bohrschablone in einer entsprechenden Position;
- Bohren durch mindestens ein Ankerschienenloch 3b oder Bohrschablonenloch eines entsprechenden Befestigungslochs 4 in den Baukörper 2 im Frässchlitz 1; und
- Befestigen der Ankerschiene 3 im Frässchlitz 1 mit dem Baukörper 2 durch das Ankerschienenverbindungsmittel 5, wobei das Ankerschienenverbindungsmittel 5 beispielsweise als Schraube, Bolzen, Nagel oder Dübel ausgebildet ist, mit dem die Ankerschiene 3 durch das jeweilige Ankerschienenloch 3b und ein jeweiliges Befestigungsloch 4 mit dem Baukörper 2 verbindet.
Fig. 3 - Fig. 7 stellen die bevorzugten Schritte der Einbettung und Befestigung der Ankerschiene 3 im Baukörper 2 dar. Die Befestigungslöcher 4 werden bevorzugt mit einer entsprechenden Bohrmaschine 11 erzeugt.
Gemäß Fig. 8 werden Spalte und/oder Fugen, die zwischen der Ankerschiene 3 und dem Frässchlitz 1 verbleiben, bevorzugt mit einem Füllmaterial 6 zumindest teilweise ausgefüllt. Mit den vorstehenden Verfahrensschritten der Befestigung wird eine vergleichbare Festigkeit der Ankerschiene 3 im Baukörper 2 erzielt.

Zusätzlich bevorzugt erfolgt das Befestigen der Ankerschiene 3 durch folgende Schritte:
- Einlegen der Ankerschiene 3 in der vorbestimmten Ankerschienenposition; und
- Befestigen der Ankerschiene 3 im Frässchlitz 1 mit dem Baukörper 2 durch ein Ausfüllen vorhandener Spalte und/oder Fugen zwischen der Ankerschiene und dem Frässchlitz mit dem Ankerschienenverbindungsmittel 5, das in diesem Fall als ein Klebstoff, Beton oder Mörtel oder flüssiges Metall ausgebildet ist und die Ankerschiene 3 entsprechend fest und formschlüssig mit dem Baukörper 2 verbindet.

Mit den vorstehenden Verfahrensschritten zur Befestigung wird eine Installation der Ankerschiene 3 im Baukörper 2 wesentlich vereinfacht, beschleunigt und kostenreduziert.

Zu einer höheren Festigkeit des Baukörperbereichs des Baukörpers 2 zwischen der ersten 2a und der dazu abgewinkelten zweiten Oberfläche 2b mit der Kante dazwischen kann gemäß Fig. 9 - Fig. 12 ein Haltebügel 7 die Ankerschiene 3 zusätzlich mit dem Baukörper 2 verbinden. Dadurch wird eine Wahrscheinlichkeit eines Ausbrechens des Baukörperbereichs wesentlich reduziert und die Sicherheit der Tragfähigkeit erhöht. Dabei wird der Haltebügel 7 mit seinem ersten Ende 7a mit der Ankerschiene 3 verbunden oder hält die Ankerschiene 2, wobei das dem ersten Ende gegenüberliegende zweite Ende 7b des Haltebügels 7 von der Kante weiter entfernt, als die Ankerschiene 3 von der Kante entfernt ist, mit dem Baukörper 2 verbunden wird. Dabei ist das erste Ende 7a des Haltebügels 7 ausgebildet und angeordnet, Kraftanteile auf die Ankerschiene 3 in Richtung zur Kante des Baukörpers 2 aufzunehmen und an das gegenüberliegende zweite Ende 7b des Haltebügels 7 zum Baukörper 2 weiterzuleiten. Dabei wird das zweite Ende 7b des Haltebügels 7 von der Ankerschiene 3 beabstandet und bevorzugt auf einer Seite der Ankerschiene 3 mit dem Baukörper 2 verbunden, die entgegengesetzt einer vorbestimmten Richtung einer Zug- oder Querkraft auf die Ankerschiene 3 liegt. Dabei ist das erste Ende des Haltebügels 7 bevorzugt ausgebildet und angeordnet, die Kraftanteile auf die Ankerschiene 3 in der Richtung der Zug- oder Querkraft aufzunehmen und an das gegenüberliegende zweite Ende des Haltebügels 7 weiterzuleiten.

Bevorzugt wird der Haltebügel 7 mit der Ankerschiene 3, wie in Fig. 9 dargestellt, verbunden, indem der Haltebügel 7 mit seinem ersten Ende 7a um die Ankerschiene 3 bügelartig herum angeordnet wird, dass das erste Ende 7a mit der Ankerschiene 3 direkt verbunden ist und zur Kante des Baukörpers 2 zeigt, um die Kraftanteile der Ankerschiene 3 in Richtung zur Kante durch das erste Ende 7a aufnehmen zu können.

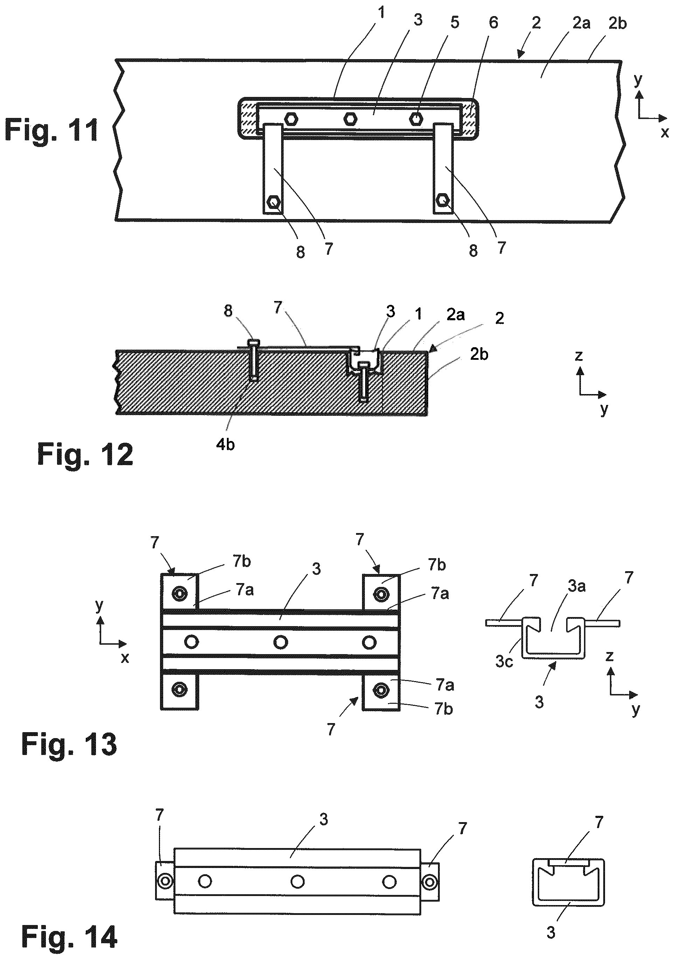

Alternativ kann der Haltebügel 7, wie in Fig. 11 und 12 dargestellt, mit seinem ersten Ende so ausgebildet sein, dass das erste Ende 7a des Haltebügels 7 in die Ankerschiene 3 an einer zweiten Ankerschienenschlitzkante eingreift, hintergreift und so Kraftanteile auf die Ankerschiene 3 aufnimmt, die in Richtung der Kante auftreten, und an das zweite Ende des Haltebügels 7 weiterleitet.

Fig. 13 zeigt andere bevorzugte Haltebügel 7, die jeweils seitlich beidseitig der Längsachse der Ankerschiene 3 ausgebildet sind und deren jeweiliges erstes Ende 7a an der Ankerschiene 3 seitlich der Ankerschienenseitenwand 3c angeschweißt sind und deren zweite Enden 7b seitlich distal nach außen abstehen und bevorzugt Löcher aufweisen, um mit dem Baukörper 2 verbunden werden können. Alternativ können diese Haltebügel 7 auch oben oberhalb des Ankerschienenschlitzes 3a an der Ankerschiene 3 angeschweißt sein. Diese Arten der seitlich oder oben angeschweißten Haltebügel 7 weisen einen auch wesentlichen Vorteil auf, dass eine Verankerung und Befestigung nicht durch unter der Ankerschiene 3 liegende Befestigungslöcher 4 zu erfolgen braucht, sondern die Befestigungslöcher 4 seitlich der Längsachse der Ankerschiene 3 in der ersten Oberfläche 1a im Baukörper 2 eingebracht werden können; dadurch liegen die Befestigungslöcher 4 höher als unter der Ankerschiene 3, wodurch beim Bohren eine Beschädigungsgefahr von unter der Ankerschiene 3 liegenden Armierungen oder Rohren im Baukörper reduziert wird. Zusätzlich, durch eine Verdoppelung der Befestigungslöcher 4 beidseitig der Längsachse wird eine Tragfähigkeit der Ankerschiene 3 im Baukörper 2 erhöht.

Fig. 14 zeigt andere bevorzugte Haltebügel 7, die entlang einer Längsachse der Ankerschiene 3 jeweils vorne und hinten an der Ankerschiene 3 ausgebildet und mit der Ankerschiene 3 verschweißt sind. Die zweiten Enden der Haltebügel 7 stehend von der Ankerschiene 3 jeweils nach außen distal ab und können mit den Befestigungslöchern 4 im Baukörper 2 außerhalb der Ankerschiene 3 verbunden werden. Vorteilhaft ist dabei, dass eine Kraftübertragung zusätzlich außerhalb des Frässchlitzes 1 erfolgen kann.

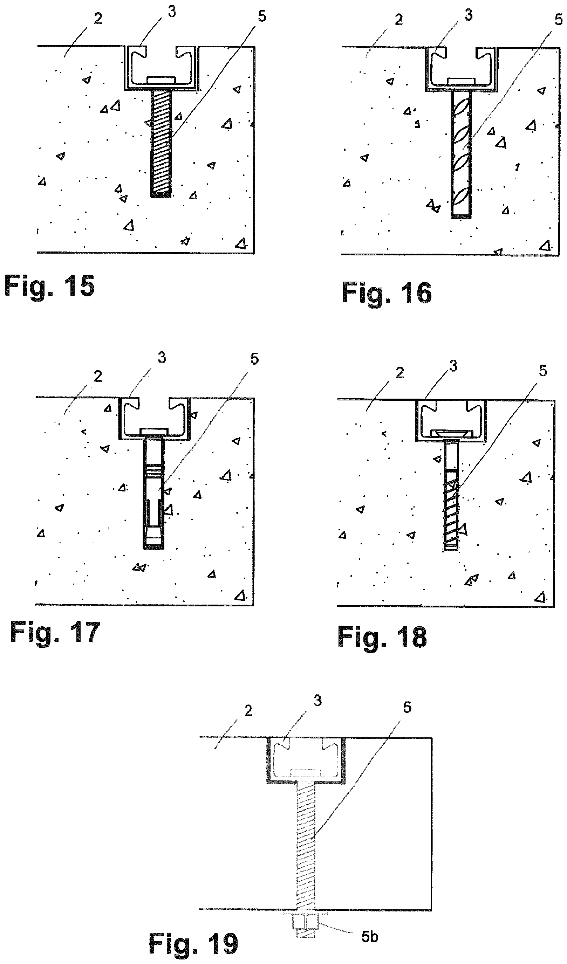

Fig. 15 - Fig. 19 zeigen im Baukörper 2 und im Frässchlitz 1 befestigte Ankerschienen 3, die mit dem Baukörper 2 durch ein jeweiliges bevorzugtes Ankerschienenverbindungsmittel verbunden ist, wobei das Ankerschienenverbindungsmittel 5 in Fig. 15 ein Gewindeanker, in Fig. 16 ein Bewehrungsstab, in Fig. 17 ein Hülsenanker, in Fig. 18 eine Betonschraube und in Fig. 19 eine Gewindeschraube mit einer Kontermutter ist.

Fig. 20 zeigt ein bevorzugtes Fräsen des Frässchlitzes 1 durch die erste Oberfläche 2a in den Baukörper 2 derart, dass eine Hinterschneidung zur ersten Oberfläche 2a erzeugt wird. Dabei kann zunächst senkrecht in den Baukörper eingefräst und dann seitlich im Frässchlitz 1 beispielsweise durch eine Schrägstellung eines Fräsblatts oder eines anderen schrägen Fräsers und Seitwärtsverschiebung eine Hinterschneidung erzeugt werden. Bevorzugt wird dabei eine Hinterschneidung sowohl auf der einen Seite der Frässchlitzlängsachse als auch auf der gegenüberliegenden Seite der Frässchlitzlängsachse erzeugt. Eine einseitige Hinterschneidung auf nur einer Seite der Frässchlitzlängsachse ist auch denkbar. Bevorzugt werden dabei mindestens eine Frässchlitzseitenwand mit einem schrägen Winkel erzeugt, der zur ersten Oberfläche 2a 45° - 89° oder weiter bevorzugt 60° - 89 ° oder weiter bevorzugt 70° - 80° oder 80° - 89° oder noch weiter bevorzugt 80° - 85° beträgt.

Beim Frässchlitz 1 mit der mindestens einen schrägen Frässchlitzseitenwand 1c wird bevorzugt eine entsprechende Ankerschiene 3 von einer Art ausgewählt, deren Ankerschienenseitenwände 3c eine erste Schräge aufweisen, die einer zweiten Schräge der Frässchlitzseitenwände 1c entspricht; dies gilt für die jeweilige Ankerschienenseitenwand 3c und die dazugehörige Frässchlitzseitenwand 1c. Dabei kann die erste Schräge zur zweiten Schräge eine vorbestimmte Toleranz aufweisen.

Das Fräsen des Frässchlitzes 1 mit der Hinterschneidung im Baukörper 2 kann auch von Anbeginn an mit einem schrägen Winkel zur ersten Oberfläche 2a erfolgen.

Bevorzugt erfolgt das Fräsen des Frässchlitzes 1 mit der Hinterschneidung so, dass der Frässchlitz 1, der die zwei gegenüberliegende Frässchlitzseitenwände 1c aufweist, zunächst bis zu einer vorbestimmten ersten Schlitztiefe senkrecht durch die erste Oberfläche 2a und ab dann in einem zweiten Winkel zur ersten Oberfläche 2a bis zu einer zweiten Schlitztiefe weitergefräst wird, Der zweite Winkel liegt bevorzugt in einem Bereich von 0-85° und weiter bevorzugt in einem Bereich von 0 - 45°.

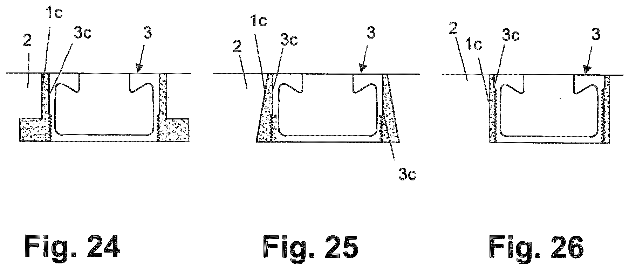

Alternativ bevorzugt erfolgt das Fräsen des Frässchlitzes 1 mit der Hinterschneidung so, dass der Frässchlitz 1 bis zu einer ersten Schlitztiefe mit einer ersten Schlitzbreite und dann weiter bis zu einer zweiten Schlitztiefe mit einer zweiten Schlitzbreite, die größer als die erste Schlitzbreite ist, gefräst wird, wie beispielsweise in Fig. 24 dargestellt.

Es kann aber auch eine trapezartige Ankerschiene 3 im Frässchlitz 1 mit senkrechten Frässchlitzseitenwänden 1c eingebettet werden, wie beispielsweise in Fig. 21 dargestellt.

Die Verwendung einer bevorzugten Ankerschiene 3, die in mindestens einem Abschnitt der Ankerschienenseitenwand 3c einen rauen Abschnitt 3d, aufweist, kann vorteilhaft für eine Verankerung im Frässchlitz sein, insbesondere dann, wenn das Ankerschienenverbindungsmittel 5 ein Klebemittel, ein Mörtel, Beton, Metall oder dergleichen ist. Der raue Abschnitt 3d kann dabei wellenartige, geriffelte, gestreifte und/oder karierte Oberflächenmuster mit entsprechenden Vertiefungen oder Durchbrüchen aufweisen, in denen sich das Ankerschienenverbindungsmittel 5 besser als auf einer planen Oberfläche verankern kann. Beispiele dazu sind in Fig. 22 - Fig. 26 dargestellt.

Das Bohren des Befestigungslochs 4 in den Baukörper kann auch so weit erfolgend, dass ein Durchbohren einer Wand des Baukörpers 2 geschieht, bei dem das Befestigungsloch 4 auch auf der Gegenseite der Wand des Baukörpers 2 zum Vorschein kommt und wobei das Verbinden des mindestens einen Ankerschienenverbindungsmittels 5 mit dem Baukörper 2 dadurch geschieht, dass das Ankerschienenverbindungsmittels 5 auf der Gegenseite durch ein Gegenverbindungselement 5b gekontert wird. Das Gegenverbindungselement 5b ist bevorzugt eine Gewindemutter mit oder ohne Unterlegscheibe.

Zur Klarheit werden unter den Merkmalen "oben" und "unten "relative Ortsangaben in senkrechter Richtung verstanden, so wie in den Figuren dargestellt.

Schräg bedeutet ein Winkel zur Senkrechten in z-Richtung von 1° - 89°.

Zur Klarheit sei angemerkt, dass unbestimmte Artikel in Verbindung mit einem Gegenstand oder Zahlenangaben, wie beispielsweise "ein" Gegenstand den Gegenstand nicht zahlenmäßig auf genau einen Gegenstand begrenzt, sondern, dass damit gemeint ist, dass mindestens "ein" Gegenstand damit gemeint ist. Dies gilt für alle unbestimmten Artikel wie beispielsweise "ein", "eine" usw.

Es versteht sich, dass wenn ein Element als "auf" einem anderen Element angebracht, damit "verbunden", "gekoppelt" oder "in Kontakt" zu sein bezeichnet wird, das Element sich dann direkt auf dem anderen Element befinden, damit verbunden oder gekoppelt sein kann, oder dass außerdem dazwischenliegende Elemente vorhanden sein können, die entweder nur dazwischen liegen oder das Element mit dem anderen Element verbinden oder koppeln oder in Kontakt halten. Wenn hingegen ein Element als "direkt auf" einem anderen Element, damit "direkt verbunden", "direkt gekoppelt" oder "direkt in Kontakt" bezeichnet wird, ist zu verstehen, dass keine dazwischenliegenden Elemente vorhanden sind. In ähnlicher Weise ist, wenn ein erstes Element als "in elektrischem Kontakt mit einem zweiten Element oder damit "elektrisch gekoppelt" bezeichnet wird, eine elektrische Bahn vorhanden, der den Stromfluss zwischen dem ersten Element und dem zweiten Element ermöglicht. Die elektrische Bahn kann Kondensatoren, gekoppelte Induktivitäten und/andere Elemente einschließen, die auch ohne direkten Kontakt zwischen den leitenden Elementen einen Stromfluss ermöglichen.

Obwohl die Ausdrücke "erstes", "zweites" usw. hierin verwendet werden können, um verschiedene Elemente, Komponenten, Bereiche und/oder Abschnitte zu bezeichnen, sind diese Elemente, Komponenten, Bereiche und/oder Abschnitte nicht durch diese Ausdrücke beschränkt. Die Ausdrücke werden nur verwendet, um ein Element eine Komponente, einen Bereich oder Abschnitt von einem anderen Element einer anderen Komponente, einem anderen Bereich oder Abschnitt zu unterscheiden. Daher kann ein erstes Element, eine erste Komponente, ein erster Bereich oder Abschnitt, die unten behandelt sind, als zweites Element, zweite Komponente, zweiter Bereich oder Abschnitt bezeichnet werden, ohne von den Lehren der vorliegenden Erfindung abzuweichen.

Ausführungsformen der Erfindung sind hierin mit Bezug auf Querschnittsansichten beschrieben, die schematische Darstellungen von Ausführungsformen der Erfindung sind. Daher kann sich die tatsächliche Dicke der Komponenten davon unterscheiden, und Abweichungen von den Formen in den Darstellungen, zum Beispiel aufgrund von Herstellungsverfahren und/oder Toleranzen sind zu erwarten. Ausführungsformen der Erfindung sind nicht als auf die speziellen Formen der hierin dargestellten Bereiche beschränkt zu verstehen, sondern sollen Abweichungen der Formen einschließen, die zum Beispiel aus der Art der Herstellung resultieren. Ein Bereich der als quadratisch oder rechteckig dargestellt oder bezeichnet ist, hat typischerweise auch gerundete oder gekrümmte Merkmale aufgrund normaler Herstellungstoleranzen. Daher sind die in den Figuren dargestellten Bereiche schematischer Art, und ihre Formen dienen nicht dazu die genaue Form eines Bereichs einer Vorrichtung darzustellen oder den Schutzumfang der Erfindung zu beschränken.

Relationsausdrücke, wie zum Beispiel "inneres", "äußeres", "oberes", "über", "unter" und unterhalb und ähnliche Ausdrücke können verwendet werden, um eine Beziehung einer Schicht oder eines anderen Bereichs mit einer anderen Schicht oder einem anderen Bereich zu bezeichnen. Es versteht sich, dass diese Ausdrücke verschiedene Ausrichtungen der Vorrichtung zusätzlich zu der Ausrichtung umfassen sollen, die in den Figuren dargestellt ist.

Zum Begriff "umfassen" sei zur Klarheit gesagt, dass wenn ein erster Vorrichtungsteil einen zweiten Vorrichtungsteil umfasst, dies bedeutet, dass der erste Vorrichtungsteil den zweiten Vorrichtungsteil "aufweist" und nicht notwendigerweise anordnungsmäßig umschließt, wenn es sich nicht beispielsweise um eine Beschreibung einer lagemäßigen und formenmäßigen Anordnung handelt; das Gleiche gilt für ein Verfahren, das einen oder mehrere Verfahrensschritte umfassen kann.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen nur der besseren Verständlichkeit und beschränken die Ansprüche in keiner Weise auf die in den Figuren dargestellten Formen.

### Bezugszeichenliste

- 1: Frässchlitz
- 1c: Frässchlitzseitenwand
- 2: Baukörper, wie beispielsweise ein Betonkörper oder ein Mauerwerk
- 2a: erste Oberfläche
- 2b: zweite Oberfläche
- 3: Ankerschiene
- 3a: Ankerschienenschlitz
- 3b: Ankerschienenloch, auch als Profilloch bekannt
- 3c: Ankerschienenseitenwand
- 3d: rauer Abschnitt der Ankerschienenseitenwand
- 4: Befestigungsloch
- 4b: weiteres Befestigungsloch
- 5: Ankerschienenverbindungsmittel
- 5b: Gegenverbindungselement, beispielsweise Kontermutter
- 6: Füllmaterial, wie beispielsweise Mörtel, Beton
- 7: Haltebügel
- 7a: erstes Ende
- 7b: zweites Ende
- 8: weiteres Verbindungsmittel
- 9: Führungsschiene
- 10: Fräsmaschine
- 11: Bohrmaschine
- 12: Anbauteilverbindungsmittel
- 12b: Befestigungsschraubteil
- 13: Anbauteil

## Patentansprüche

1. Verfahren zu einer Einbettung und Befestigung einer Ankerschiene (3) in einer ersten Oberfläche (2a) eines Baukörpers (2), wobei die Ankerschiene (3) an der ersten Oberfläche (2a) mit einem Ankerschienenschlitz (3a) zutage tritt, der dafür bestimmt ist, über ein Anbauteilverbindungsmittel (12) mindestens ein Anbauteil (13) bei davon ausgehenden vorbestimmten Kräften sicher zu halten, folgende Schritte umfassend:
a) Bestimmen einer Position und Ausrichtung eines Frässchlitzes (1) mit einer Schlitzlänge, Schlitzbreite und Schlitztiefe unter der ersten Oberfläche (2a), um darin die Ankerschiene (3) in einer vorbestimmten Ankerschienenposition einbetten zu können;
b) Fräsen des Frässchlitzes (1) an der vorbestimmten Position und mit der vorbestimmten Ausrichtung durch die erste Oberfläche (2a) in den Baukörper (2);
c) Einlegen der Ankerschiene (3) in den Frässchlitz (1);
d) Befestigen der Ankerschiene (3) im Frässchlitz (1) durch ein Ankerschienenverbindungsmittel (5), das ausgebildet ist, die Ankerschiene (3) mit dem Baukörper (2) so fest zu verbinden, dass die vom jeweiligen Anbauteil (13) ausgehenden Kräfte sicher gehalten werden;
**dadurch gekennzeichnet, dass**
e) das Befestigen der Ankerschiene (3) durch folgende Schritte erfolgt:
- Einlegen der Ankerschiene (3) in der vorbestimmten Ankerschienenposition oder einer entsprechenden Bohrschablone im Frässchlitz (1) in einer entsprechenden Position;
- Bohren durch mindestens ein Ankerschienenloch (3b) oder Bohrschablonenloch eines entsprechenden Befestigungslochs (4) in den Baukörper (2) im Frässchlitz (1); und
- Befestigen der Ankerschiene (3) im Frässchlitz (1) mit dem Baukörper (2) durch das Ankerschienenverbindungsmittel (5), das als Schraube, Bolzen, Nagel oder Dübel ausgebildet ist und die Ankerschiene (3) durch das jeweilige Ankerschienenloch (3b) und Befestigungsloch (4) mit dem Baukörper (2) verbindet.

2. Das Verfahren gemäß Anspruch 1, wobei das Fräsen des Frässchlitzes (1) mit Hilfe einer Führungsschiene (9) vorgenommen wird, auf der eine Fräsmaschine (10) zum Fräsen des Frässchlitzes (1) vorbestimmt verfahrbar ist.

3. Das Verfahren gemäß Anspruch 1 oder 2, wobei das Bestimmen der Position und der Ausrichtung des Frässchlitzes (1) mit der Führungsschiene (9) oder der Fräsmaschine vorgenommen wird, die eine entsprechende Messvorrichtung zu einer Messung eines vorbestimmten Abstands zu mindestens einem vorbestimmten Referenzpunkt oder einer Kante am Baukörper (2) oder eine Anschlagvorrichtung mit dem vorbestimmten Abstand, der einstellbar ist, aufweist, wobei die Fräsmaschine zum Fräsen des Frässchlitzes (1) auf der Führungsschiene (9) vorbestimmt verfahrbar ist.

4. Das Verfahren gemäß einem der vorstehenden Ansprüche, wobei verbleibende Spalte und/oder Fugen zwischen der Ankerschiene (3) und dem Frässchlitz (1) mit Füllmaterial aufgefüllt werden, das sich darin verfestigt.

5. Das Verfahren gemäß einem der vorstehenden Ansprüche, wobei die Ankerschiene (3) zusätzlich zu dem mindestens einen Ankerschienenverbindungsmittel (5) durch einen Haltebügel (7) mit dem Baukörper (2) so verbunden wird, dass der Haltebügel (7) mit seinem ersten Ende (7a) mit der Ankerschiene (3) in Kontakt gebracht oder verbunden wird, wobei das dem ersten Ende gegenüberliegende zweite Ende (7b) des Haltebügels (7) von der Ankerschiene (3) beabstandet und auf einer Seite der Ankerschiene (3) mit dem Baukörper (2) verbunden wird, die entgegengesetzt einer vorbestimmten Richtung einer Zug- oder Querkraft auf die Ankerschiene (3) liegt, wobei das erste Ende des Haltebügels (7) ausgebildet und angeordnet ist, Kraftanteile auf die Ankerschiene (3) in der Richtung der Zug- oder Querkraft aufzunehmen und an das gegenüberliegende zweite Ende des Haltebügels (7) weiterzuleiten.

6. Das Verfahren gemäß Anspruch 5, wobei der Haltebügel (7) mit der Ankerschiene (3) in Kontakt gebracht oder verbunden wird, indem der Haltebügel (7) mit seinem ersten Ende (7a) um die Ankerschiene (3) bügelartig herum so angeordnet wird, dass das erste Ende (7a) mit der Ankerschiene (3) direkt in Kontakt steht oder verbunden ist und die Ankerschiene (3) durch die Zugkraft gegen den Haltebügel (7) gedrückt und davon gehalten wird.

7. Das Verfahren gemäß einem der vorstehenden Ansprüche, wobei das Fräsen des Frässchlitzes (1) durch die erste Oberfläche (2a) in den Baukörper (2) so erfolgt, dass zunächst senkrecht in den Baukörper eingefräst wird und dann seitlich im Frässchlitz (1) eine Hinterschneidung erzeugt wird; oder
wobei das Fräsen des Frässchlitzes (1) in den Baukörper (2) in einem schrägen Winkel zur ersten Oberfläche (2a) erfolgt, so dass dabei eine Hinterschneidung zur ersten Oberfläche (2a) erzeugt wird.

8. Das Verfahren gemäß Anspruch 4, wobei das Füllmaterial eines von Folgendem umfasst: Klebstoff, Beton, Mörtel, Epoxidharz, Acrylharz, Glasfasern, flüssiges Metall.

9. Das Verfahren gemäß einem der vorstehenden Ansprüche, wobei das Bohren des Befestigungslochs (4) in den Baukörper so weit als ein Durchbohren vorgenommen wird, bis das Loch auf der Gegenseite des Baukörpers herauskommt und zugänglich wird, und wobei das Verbinden des mindestens einen Ankerschienenverbindungsmittels (5) mit dem Baukörper (2) dadurch geschieht, dass das Ankerschienenverbindungsmittels (5) auf der Gegenseite durch ein Gegenverbindungselement (5b) gekontert wird.

## Claims

1. Method of embedding and fixing an anchor rail (3) in a first surface (2a) of a solidium (2), the anchor rail (3) surfacing at the first surface (2a) with an anchor rail slot (3a) which is designed to securely retain at least one add-on piece (13) with predefined forces issuing from it via an add-on piece connecting means (12); comprising the following steps:
a) determining a position and orientation of a routed slot (1) having a slot length, slot width and slot depth beneath the first surface (2a) so as to be able to embed the anchor rail (3) therein in a predefined anchor rail position;
b) routing the slot (1) in the predefined position and with the predefined orientation through the first surface (2a) into the solidium (2);
c) inserting the anchor rail (3) into the routed slot (1);
d) fixing the anchor rail (3) in the routed slot (1) by means of an anchor rail connecting means (5) which is adapted to connect the anchor rail (3) to the solidium (2) firmly enough so that the forces issuing from the respective add-on piece (13) are securely held;
**characterized in that**
e) fixing of the anchor rail (3) is performed by means of the following steps:
- inserting the anchor rail (3) in the predefined anchor rail position or a respective drilling jig in the routed slot (1) in a respective position;
- drilling, through at least one anchor rail hole (3b) or drilling jig hole, of a respective mounting hole (4) into the solidium (2) in the routed slot (1); and
- fastening the anchor rail (3) in the routed slot (1) with the solidium (2) by means of the anchor rail connecting means (5) which is embodied as a screw, bolt, nail or peg and which connects the anchor rail (3) to the solidium (2) through the respective anchor rail hole (3b) and the mounting hole (4).

2. The method according to Claim 1, where the routing of the slot (1) is performed by means of a guide rail (9) on which a milling machine (10) for routing the slot (1) can be translated in a predefined manner.

3. The method according to Claim 1 or 2, wherein determining of the position and orientation of the routed slot (1) is performed by means of the guide rail (9) or the milling machine which has a respective measuring device for measuring a predefined distance from at least one predefined point of reference or an edge of a solidium (2) or an abutment device with the predefined distance which can be set, where the milling machine can be translated in a predefined manner on the guide rail (9) for routing the slot (1).

4. The method according to one of the above Claims, where any remaining gaps and/or joints between the anchor rail (3) and the routed slot (1) are filled with filling material which solidifies therein.

5. The method according to one of the above Claims, the anchor rail (3) being connected to the solidium, in addition to the at least one anchor rail connecting means (5), by means of a mounting bracket (7) in such a way that the mounting bracket (7) is contacted or connected at its first end (7a) with the anchor rail (3), the second end (7b) of the mounting bracket (7), which is opposite the first end, being spaced from the anchor rail (3) and connected to the solidium (2) on one side of the anchor rail (3) which lies opposite a predefined direction of a tensile or transverse force on the anchor rail (3); the first end of the mounting bracket (7) being adapted and arranged to absorb force components on the anchor rail (3) in the direction of the tensile or transverse force and to transfer them to the opposite second end of the mounting bracket (7).

6. The method according to Claim 5, the mounting bracket (7) being contacted with or connected to the anchor rail (3) by arrangement of the mounting bracket (7) around the anchor rail (3) in a bracket-like manner with its first end (7a) such that the first end (7a) is directly in contact or connected with the anchor rail (3) and the anchor rail (3) is pressed against the mounting bracket (7) by the tensile force and retained by the same.

7. The method according to one of the above Claims, routing of the slot (1) through the first surface (2a) into the solidium (2) being performed in such a manner that routing first takes place vertically into the solidium and then an undercut is produced laterally in the routed slot (1); or
routing of the slot (1) into the solidium (2) is performed at a slanted angle with respect to the first surface (2a) such that an undercut with respect to the first surface (2a) is produced.

8. The method according to Claim 4, the filling material comprising one of the following: adhesive, concrete, mortar, epoxy resin, acrylic resin, glass fibers, liquid metal.

9. The method according to one of the above Claims, drilling of the mounting hole (4) into the solidium being performed as through-boring until the hole exits from the opposite side of the solidium and becomes accessible, and connecting of the at least one anchor-rail connecting means (5) to the solidium (2) occurring by fixing the anchor rail connecting means (5) on the opposite side by means of an opposite connection element (5b).

## Revendications

1. Procédé d'incorporation et de fixation d'un rail d'ancrage (3) dans une première surface (2a) d'un corps de bâtiment (2), sachant que le rail d'ancrage (3) apparaît sur la première surface (2a) avec une fente de rail d'ancrage (3a), qui est destinée à maintenir sûr au moins une partie de montage (13) par un moyen de liaison de partie de montage (12) en cas de forces prédéterminées émanant de cela, comprenant les étapes suivantes :
a) la détermination d'une position et d'une orientation d'une fente de fraisage (1) avec une longueur de fente, une largeur de fente et une profondeur de fente en dessous de la première surface (2a) pour pouvoir y incorporer le rail d'ancrage (3) dans une position de rail d'ancrage prédéterminée ;
b) fraisage de la fente de fraisage (1) à la position prédéterminée et avec l'orientation prédéterminée à travers la première surface (2a) dans le corps de bâtiment (2) ;
c) introduction du rail d'ancrage (3) dans la fente de fraisage (1);
d) fixation du rail d'ancrage (3) dans la fente de fraisage (1) par un moyen de liaison de rail d'ancrage (5), qui est constitué pour raccorder le rail d'ancrage (3) au corps de bâtiment (2) si fermement que les forces émanant de la partie de montage respective (13) sont maintenues stables ;
**caractérisé en ce que**
e) la fixation du rail d'ancrage (3) a lieu par les étapes suivantes :
- introduction du rail d'ancrage (3) dans la position de rail d'ancrage prédéterminée ou dans un gabarit de perçage correspondant dans la fente de fraisage (1) dans une position correspondante ;
- perçage par au moins un trou de rail d'ancrage (3b) ou un trou de gabarit de perçage d'un trou de fixation (4) correspondant dans le corps de bâtiment (2) dans la fente de fraisage (1) ;
et
- fixation du rail d'ancrage (3) dans la fente de fraisage (1) avec le corps de bâtiment (2) par le moyen de liaison de rail d'ancrage (5), qui est constitué sous la forme de vis, de boulons, de clous ou de goujons et relie le rail d'ancrage (3) par le trou de rail d'ancrage respectif (3b) et le trou de fixation (4) au corps de bâtiment (2).

2. Procédé selon la revendication 1, sachant que le fraisage de la fente de fraisage (1) est pratiqué à l'aide d'un rail de guidage (9) sur lequel une fraiseuse (10) peut être déplacée de façon prédéterminée pour fraiser la fente de fraisage (1).

3. Procédé selon la revendication 1 ou 2, sachant que la détermination de la position et de l'orientation de la fente de fraisage (1) est pratiquée avec le rail de guidage (9) ou la fraiseuse, qui comporte un dispositif de mesure correspondant pour une mesure d'une distance prédéfinie par rapport à au moins un point de référence prédéfini ou un bord sur le corps de bâtiment (2) ou un dispositif de butée avec la distance prédéfinie, qui est réglable, sachant que la fraiseuse destinée au fraisage de la fente de fraisage (1) peut être déplacée de façon prédéterminée sur le rail de guidage (9).

4. Procédé selon l'une quelconque des revendications précédentes, sachant que les fentes et/ou joints restants entre le rail d'ancrage (3) et la fente de fraisage (1) sont remplis de matériau de remplissage, qui se solidifie à l'intérieur.

5. Procédé selon l'une quelconque des revendications précédentes, sachant que le rail d'ancrage (3) est relié au corps de bâtiment (2) en plus d'au moins un moyen de liaison de rail d'ancrage (5) par un étrier de retenue (7) de telle sorte que l'étrier de retenue (7) est mis en contact ou relié avec sa première extrémité (7a) avec le rail d'ancrage (3), sachant que la deuxième extrémité (7b) opposée à la première extrémité de l'étrier de retenue (7) est à distance du rail d'ancrage (3) et est reliée sur un côté du rail d'ancrage (3) au corps de bâtiment (2), qui se situe sur le rail d'ancrage (3) en opposition à une direction prédéterminée d'une force de traction ou transversale, sachant que la première extrémité de l'étrier de retenue (7) est constituée et disposée pour absorber des parties de force sur le rail d'ancrage (3) dans la direction de la force de traction ou transversale et les transmettre à la deuxième extrémité opposée de l'étrier de retenue (7).

6. Procédé selon la revendication 5, sachant que l'étrier de retenue (7) est mis en contact ou relié avec le rail d'ancrage (3), l'étrier de retenue (7) étant disposé en forme d'étrier avec sa première extrémité (7a) autour du rail d'ancrage (3) de telle sorte que la première extrémité (7a) se trouve directement en contact ou relié avec le rail d'ancrage (3) et le rail d'ancrage (3) est comprimé et de ce fait maintenu contre l'étrier de retenue (7) par la force de traction.

7. Procédé selon l'une quelconque des revendications précédentes, sachant que le fraisage de la fente de fraisage (1) a lieu à travers la première surface (2a) dans le corps de bâtiment (2) de telle manière que l'on fraise d'abord perpendiculairement dans le corps de bâtiment et une contre-dépouille est ensuite latéralement produite dans la fente de fraisage (1) ; ou
sachant que le fraisage de la fente de fraisage (1) dans le corps de bâtiment (2) a lieu dans un angle oblique par rapport à la première surface (2a) de telle sorte qu'une contre-dépouille est produite à cet effet par rapport à la première surface (2a).

8. Procédé selon la revendication 4, sachant que le matériau de remplissage comprend un des matériaux suivants : adhésif, béton, mortier, résine époxy, résine acrylique, fibres de verre, métal liquide.

9. Procédé selon l'une quelconque des revendications précédentes, sachant que le perçage du trou de fixation (4) dans le corps de bâtiment dans la mesure où un perçage traversant est pratiqué jusqu'à ce que le trou ressorte sur le côté opposé du corps de bâtiment et est accessible et sachant que la liaison d'au moins un moyen de liaison de rail d'ancrage (5) avec le corps de bâtiment (2) se produit du fait que le moyen de liaison de rail d'ancrage (5) est bloqué sur le côté opposé par un élément de liaison réciproque (5b).
